# EUROPEAN PATENT APPLICATION

(11) **EP 4 761 081 A1**
(43) Date of publication of application: **17.06.2026**
(21) Application number: 24220272.9
(22) Date of filing: 16.12.2024
(51) Int. Cl.: H02M 1/00, H02M 1/36, H02M 3/07, H02M 3/158, H02M 7/483

(54) **BUCK CONVERTER CIRCUIT WITH FLYING CAPACITOR**

(71) Applicant: ABB E-mobility B.V., 2629 JG Delft (NL)
(72) Inventor: LEGA, Marco, 52021 Arezzo (IT); MONTEMEZZO, Thomas, 52025 Montevarchi (IT); MARTINI, David, 52027 San Giovanni Valdarno (AR) (IT); ROMANO, Martino, 52028 Terranuova B.NI (IT); PAOLINI, Simone, 52027 San Giovanni Valdarno (IT); RONDINE, Gianluca, 50144 Firenze (IT); MARRONI, Ettore, 52024 Arezzo (IT)
(74) Representative: Zimmermann & Partner Patentanwälte mbB

(57) **Abstract**

A buck converter circuit according to the disclosure includes a pre-charging switch (10), a switching element Q1 (11), a switching element Q2 (12), a switching element Q3 (13), a switching element Q4 (14), a flying capacitor (20), a voltage supply node (40), a first flying capacitor node (41), a second flying capacitor node (41), a switch node (43) and a control system (50). The voltage supply node (40), the pre-charging switch (10) and the first flying capacitor node (41) are sequentially connected in series. The voltage supply node (40), the switching element Q1 (11) and the first flying capacitor node (41) are sequentially connected in series. The first flying capacitor node (41), the flying capacitor (20), the second flying capacitor node (41) and the switching element Q4 (14) are sequentially connected in series. The first flying capacitor node (41), the switching element Q2 (12), the switch node (43), the switching element Q3 (13) and the second flying capacitor node (41) are sequentially connected in series. The control system (50) is configured for executing a pre-charging process (100) and a cyclic converting process (200). During the pre-charging process (100), the control system (50) controls the pre-charging switch (10) and the switching element Q4 (14) to be conductive to build up a voltage difference in the flying capacitor (20). During the cyclic converting process (200) the control system (50) controls the pre-charging switch (10) to be isolating when the switching element Q1 is isolating.

## Description

### Technical field

The technical field relates to power electronic converter based on flying capacitor topology. More specifically, the technical field relates to a buck converter circuit including a flying capacitor and a method for operating the flying capacitor in the buck converter circuit.

### Technical Background

Traditionally, a buck converter circuit is used to reduce the voltage supplied by a voltage supply to a user-defined output voltage. The output voltage is further used in e.g. a connected electric circuit. A buck converter circuit includes multiple switching elements. A flying capacitor may be used to reduce the voltage difference across the switching elements.

In this case, the flying capacitor must be charged before the buck converter circuit can supply the user-defined output voltage. Traditionally, the flying capacitor is charged by an additional converter regulated by a constant current controller. However, this needs an additional active converter composed by semiconductors, inductors, capacitors, drivers, controllers and a protection logic.

### Description of disclosure

According to an aspect of the disclosure, the buck converter circuit includes a pre-charging switch, a switching element Q1, a switching element Q2, a switching element Q3, a switching element Q4, a flying capacitor, a voltage supply node, a first flying capacitor node, a second flying capacitor node, a switch node and a control system.

The voltage supply node, the pre-charging switch and the first flying capacitor node are sequentially connected in series. The voltage supply node, the switching element Q1 and the first flying capacitor node are sequentially connected in series. The first flying capacitor node, the flying capacitor, the second flying capacitor node and the switching element Q4 are sequentially connected in series. The first flying capacitor node, the switching element Q2, the switch node, the switching element Q3 and the second flying capacitor node are sequentially connected in series. An input voltage Vᵢₙ is supplied at the voltage supply node.

The control system is configured for executing a pre-charging process and a cyclic converting process. During the pre-charging process the control system controls the pre-charging switch and the switching element Q4 to be conductive. This builds up a voltage difference in the flying capacitor.

The cyclic converting process includes alternating charging and discharging steps for cyclic discharging and charging of the flying capacitor. During the cyclic converting process, the control system controls the pre-charging switch to be isolating when the switching element Q1 is isolating. The cyclic converting process further includes a charging step and a discharging step. During the charging step of the cyclic converting process, the control system controls the switching element Q1 and the switching element Q3 to be conductive and the switching element Q2 and the switching element Q4 to be isolating to charge the flying capacitor. During the discharging step of the cyclic converting process, the control system controls the switching element Q2 and the switching element Q4 to be conductive and the switching element Q1 and the switching element Q3 to be isolating to discharge the flying capacitor.

According to an aspect of the disclosure, the buck converter circuit includes a pre-charging switch, a switching element Q1, a switching element Q2, a switching element Q3, a switching element Q4, a flying capacitor, a voltage supply node, a first flying capacitor node, a second flying capacitor node, a switch node and a control system.

The voltage supply node, the pre-charging switch and the first flying capacitor node are sequentially connected in series. The voltage supply node, the switching element Q1 and the first flying capacitor node are sequentially connected in series. The first flying capacitor node, the flying capacitor, the second flying capacitor node and the switching element Q4 are sequentially connected in series. The first flying capacitor node, the switching element Q2, the switch node, the switching element Q3 and the second flying capacitor node are sequentially connected in series.

The method for operating the flying capacitor in the buck converter circuit includes: supplying an input voltage Vᵢₙ at the voltage supply node; performing a pre-charging process to build up a voltage difference in the flying capacitor; and performing a cyclic converting process.

The pre-charging process includes controlling the pre-charging switch and the switching element Q4 to be conductive to build up a voltage difference in the flying capacitor. The cyclic converting process includes alternating charging and discharging steps for cyclic discharging and charging of the flying capacitor.

The cyclic converting process includes; controlling the pre-charging switch to be isolating when the switching element Q1 is isolating; controlling, during a charging step of the cyclic converting process, the switching element Q1 and the switching element Q3 to be conductive and the switching element Q2 and the switching element Q4 to be isolating to charge the flying capacitor; controlling, during a discharging step of the cyclic converting process, the switching element Q2 and the switching element Q4 to be conductive and the switching element Q1 and the switching element Q3 to be isolating to discharge the flying capacitor.

According to an aspect of the disclosure, only a pre-charging switch may be needed to charge the flying capacitor. Optionally, a pre-charging switch may be included before the pre-charging switch. No additional electrical components may be needed. The buck converter circuit may include an isolated electrical connection of the voltage supply to the flying capacitor and the ground connection. This reduces production costs, complexity of the circuitry, complexity of the control system and/or efficiency.

According to an aspect of the disclosure, the voltage difference across most, optionally all, switching elements may be reduced. The voltage difference built up in the flying capacitor may reduce the voltage difference across most, optionally all, switching elements. The voltage difference may be reduced from the input voltage Vᵢₙ to the input voltage Vᵢₙ minus the voltage difference built up in the flying capacitor. Optionally, the voltage difference may be reduced to the voltage difference built up in the flying capacitor. This may enable the use of switching elements with a lower voltage rating. Optionally, this may enable the use of a switching element Q1, a switching element Q2, a switching element Q3 and a switching element Q4 with a power rating lower than the input voltage Vᵢₙ. The pre-charging resistor may enable the use of a pre-charging switch with a power rating lower than the input voltage Vᵢₙ.

According to an aspect of the disclosure, the voltage difference built up in the flying capacitor may be measured throughout the pre-charging process. This may allow the controller to terminate the pre-charging process and/or react to irregularities. This may allow to measure the voltage difference built up in the flying capacitor in the beginning of the pre-charging process to determine if a pre-charging process is required.

According to an aspect of the disclosure, the voltage difference built up in the flying capacitor may be measured throughout the cyclic converting process. This may allow the controller to monitor the voltage difference built up in the flying capacitor. The controller may reinitiate the pre-charging process if the measured built up voltage difference is too low and/or react to irregularities. Further, this may allow to measure the voltage difference built up in the flying capacitor in the beginning of the cyclic converting process to determine if a pre-charging process is required.

According to an aspect of the disclosure, the duration of the pre-charging process may be reduced. The isolated electrical connection of the voltage supply to the flying capacitor may allow for a continuous charging of the flying capacitor with the input voltage Vᵢₙ. Optionally, the isolated electrical connection of the voltage supply to the flying capacitor may allow for a continuous charging of the flying capacitor with the input voltage Vᵢₙ minus the voltage drop due to the pre-charging resistor.

According to an aspect of the disclosure, the efficiency of the pre-charging process may be increased. The isolated electrical connection of the voltage supply to the flying capacitor may allow for a continuous charging of the flying capacitor with the input voltage Vᵢₙ. No energy may be lost in other electrical components. Optionally, energy may only be lost in the electrical connections, the pre-charging switch and/or in the pre-charging resistor.

According to an aspect of the disclosure, a switching element may be controlled to be conductive or to be isolating. Optionally, multiple components may be combined in a single switching element. E.g. a switching element A and a switching element B sequentially connected in series may be interpreted as a single switching element. The single switching element of the example would be conductive if the switching element A and the switching element B are conductive and the single switching element of the example would be isolating if the switching element A and/or the switching element B are/is isolating. Examples for switching elements may be a solid-state switch, a transistor, a semiconductor transistor, a logical gate, a bipolar junction transistor, a metal-oxide-semiconductor field-effect transistor (mosfet), an analogue switch, an electromechanical relay, a power transistor, an insulated-gate bipolar transistor, a silicon-controlled rectifier, an AC-6b rated contactor and/or a power mosfet.

According to an aspect of the disclosure, the pre-charging switch may be a switching element.

According to an aspect of the disclosure, a node may be an electrical connection. A node may connect at least two electrical components. Optionally, a node may be understood as an electrical connection of multiple electrical components. An electrical component may be a capacitor, a resistor, an inductor, a switching element, any other electrical component and/or a combination thereof.

According to an aspect of the disclosure, the control system may be implemented in a microcontroller, by means of analog hardware circuitry, in a digital signal processor, any other processor and/or a combination thereof.

According to an aspect of the disclosure, the control system may have a memory with program code which, when executed by the control system, carries out the respective method steps for which the control system is configured.

According to an aspect of the disclosure, an electrical component A, an electrical component B and an electrical component C are sequentially connected in series if the electrical component A is electrically connected with the electrical component C through the electrical component B. An electrical connection may be interpreted as a connection that permits, at least once, a current flow. E.g. an electrical connection may include a wire, a capacitor, a resistor, an inductor, a switching element, any other electrical component and/or a combination thereof. For example, the electrical component A may be connected to the electrical component B by means of a wire and/or a switching element and/or any other electrical component.

According to an aspect of the disclosure, the pre-charging process may be executed to charge the flying capacitor. E.g. initially no voltage difference and/or a too low voltage difference is built up in the flying capacitor. Hence, before a cyclic converting process, the pre-charging process is executed to charge the flying capacitor. The pre-charging process is terminated once a pre-charging condition is met. The pre-charging condition may, for example include that the voltage difference built up in the flying capacitor exceeds a predetermined pre-charging voltage, and/or that a predetermined pre-charging time or integrated current exceeds a corresponding threshold.

According to an aspect of the disclosure, the cyclic converting process may supply an alternating voltage level at the switching node.

According to an aspect of the disclosure, the buck converter circuit may further include a pre-charging resistor. The voltage supply node, the pre-charging resistor and the pre-charging switch are sequentially connected in series. Advantageously, the pre-charging resistor may reduce the voltage difference across the pre-charging switch. Optionally, the pre-charging resistor may reduce the voltage difference across the pre-charging switch to 50% of the input voltage Vᵢₙ.

According to an aspect of the disclosure, the control system may include a voltage measuring device for measuring the voltage difference built up in the flying capacitor. The control system may be configured to terminate the pre-charging process once the measured voltage difference built up in the flying capacitor exceeds a predetermined pre-charging voltage threshold value. Optionally, the pre-charging voltage threshold value is 50% of the input voltage Vᵢₙ.

According to an aspect of the disclosure, a voltage measuring device may be a voltmeter in a parallel connection to the flying capacitor. E.g. the voltmeter may be connected to the first flying capacitor node and to the second flying capacitor node in a parallel connection to the flying capacitor.

According to an aspect of the disclosure, the buck converter circuit may further include an inductor, a capacitor, an output node and a ground connection. The second flying capacitor node, the switching element Q4, and the ground connection may be sequentially connected in series. The switch node, the inductor, the output node, the capacitor and the ground connection may be sequentially connected in series. Optionally, the buck converter circuit may further include an output resistor. The output node, the output resistor and the ground connection may be sequentially connected in series.

According to an aspect of the disclosure, at least two of the ground connections of the buck converter circuit may be connected at a ground node. The ground node may be connected to the ground connection. Optionally, all ground connections of the buck converter circuit may be connected at a ground node.

According to an aspect of the disclosure, the buck converter circuit may provide a user-defined output voltage Vₒᵤₜ at the output node. During the cyclic converting process, the controller may perform a pulse-width modulation to reduce the input voltage Vᵢₙ to the user-defined output voltage Vₒᵤₜ.

According to an aspect of the disclosure, the cyclic converting process may include at least the charging step, an intermediate step, the discharging step and the intermediate step to be repeated sequentially.

According to an aspect of the disclosure, the pulse-width modulation may define a duty cycle. For a duty cycle smaller than 0.5, the switching element Q3 and the switching element Q4 may be configured to be conductive and the switching element Q1 and the switching element Q2 may be configured to be isolating during the intermediate step of the cyclic converting process.

For a duty cycle larger than 0.5, the switching element Q1 and the switching element Q2 may be configured to be conductive and the switching element Q3 and the switching element Q4 may be configured to be isolating during the intermediate step of the cyclic converting process.

According to an aspect of the disclosure, the duty cycle may be defined by the output voltage Vₒᵤₜ divided by the input voltage Vᵢₙ. Alternatively, the duty cycle may be defined by the fraction of one period in which the cyclic converting process is either in the charging step or in the discharging step. Optionally, the duty cycle may be defined as the fraction of one period in which the flying capacitor is conductively connected to the switching node.

According to an aspect of the disclosure, the control system may control the switching element Q1, the switching element Q2 and the switching element Q3 to be isolating during the pre-charging process.

According to an aspect of the disclosure, the control system may control the switching element Q1, the switching element Q2, the switching element Q3 and the switching element Q4 during the cyclic converting process.

According to an aspect of the disclosure, the control system may be configured to reinitiate the pre-charging process. The control system may reinitiate the pre-charging process if the measured voltage difference built up in the flying capacitor is outside a range of tolerance. Optionally, the control system may reinitiate the pre-charging process if the maximum measured voltage difference built up in the flying capacitor during one period or multiple periods is outside a range of tolerance.

According to an aspect of the disclosure, the range of tolerance may be defined as 15%, optionally 10%, or more optionally 5% variation of the pre-charging voltage.

According to an aspect of the disclosure, the buck converter circuit may be a multi-level buck converter circuit including at least one flying capacitor. Optionally, the multi-level buck converter circuit may have a flying capacitor for every level.

According to an aspect of the disclosure, the method for operating a flying capacitor in a buck converter circuit may be carried out by a buck converter circuit according to any buck convert circuit according to the disclosure. Optionally, the method for operating a flying capacitor in a buck converter circuit may be carried out by a buck converter circuit according to any embodiment of a buck convert circuit described herein.

According to an aspect of the disclosure, the method may further include, during the pre-charging process, measuring the voltage difference built up in the flying capacitor. Optionally, the method may further include terminating the pre-charging process once the measured voltage difference built up in the flying capacitor exceeds a predetermined pre-charging voltage threshold value.

According to an aspect of the disclosure, the method may further include providing a user-defined output voltage Vₒᵤₜ at the output node. During the cyclic converting process, the controller may perform a pulse-width modulation to reduce the input voltage Vᵢₙ to the user-defined output voltage Vₒᵤₜ. The cyclic converting process may include at least the charging step, an intermediate step, the discharging step and the intermediate step to be repeated sequentially. Optionally, all intermediate steps may be identical or at least two intermediate steps may be different.

According to an aspect of the disclosure, in case of a buck converter circuit of at least four levels a transferring step and an intermediate step may be included in the cyclic converting process for every additional level. Optionally, all intermediate steps may be identical or at least two intermediate steps may be different.

According to an aspect of the disclosure, the method may further include: for a duty cycle smaller than 0.5, controlling the switching element Q3 and the switching element Q4 to be conductive and controlling the switching element Q1 and the switching element Q2 to be isolating during the intermediate step of the cyclic converting process; for a duty cycle larger than 0.5, controlling the switching element Q1 and the switching element Q2 to be conductive and the switching element Q3 and the switching element Q4 to be isolating during the intermediate step of the cyclic converting process.

According to an aspect of the disclosure, the method may further include controlling, by the control system, the switching element Q1, the switching element Q2 and the switching element Q3 to be isolating during the pre-charging process.

According to an aspect of the disclosure, the method may further include controlling, by the control system, the switching element Q1, the switching element Q2, the switching element Q3 and the switching element Q4 during the cyclic converting process.

According to an aspect of the disclosure, the method may further include measuring the voltage difference built up in the flying capacitor during the cyclic converting process. Optionally, the method may further include measuring the maximum voltage difference built up in the flying capacitor during a period of the cyclic converting process.

According to an aspect of the disclosure, the method may further include reinitiating the pre-charging process. The pre-charging process may be reinitiated if the measured voltage difference built up in the flying capacitor is outside a range of tolerance. Optionally, the pre-charging process may be reinitiated if the maximum measured voltage difference built up in the flying capacitor during one period or multiple periods is outside a range of tolerance.

According to an aspect of the disclosure, the method for operating a flying capacitor can be executed for at least one, optionally all, flying capacitors in a multi-level buck converter circuit.

According to an aspect of the disclosure, the buck converter circuit fulfills at least one of the following conditions: (a) the voltage difference built up in the flying capacitor is at least 500V; (b) the user-defined output voltage Vₒᵤₜ is at least 900V; (c) the input voltage Vᵢₙ is at least 1000V; (d) the energy needed to charge the flying capacitor is at least 20J; (e) the input voltage Vᵢₙ is a DC voltage; and/or (f) the user-defined output voltage Vₒᵤₜ is a DC voltage.

According to an aspect of the disclosure, the buck converter circuit may have the topography of a buck-boost converter circuit.

### Brief description of the figures

In the following, examples for the disclosure are described in more detail with reference to the drawings. Therein:
Fig. 1 illustrating a buck converter circuit according to an embodiment described herein;
Fig. 2 illustrating a buck converter circuit according to a further embodiment described herein;
Fig. 3 illustrating a buck converter circuit according to a further embodiment described herein;
Fig. 4 illustrating a buck converter circuit according to a further embodiment described herein;
Fig. 5 illustrating a buck converter circuit according to a further embodiment described herein;
Fig. 6 illustrating a buck converter circuit according to a further embodiment described herein;
Fig. 7a plotting the voltage at the switching node and the current in the inductor over one period for a duty cycle smaller than 0.5;
Fig. 7b plotting the voltage at the switching node and the current in the inductor over one period for a duty cycle larger than 0.5;
Fig. 8a illustrating the sequence of the pre-charging process and the cyclic converting process; and
Fig. 8b illustrating the cyclic converting process.

### Detailed description of the figures

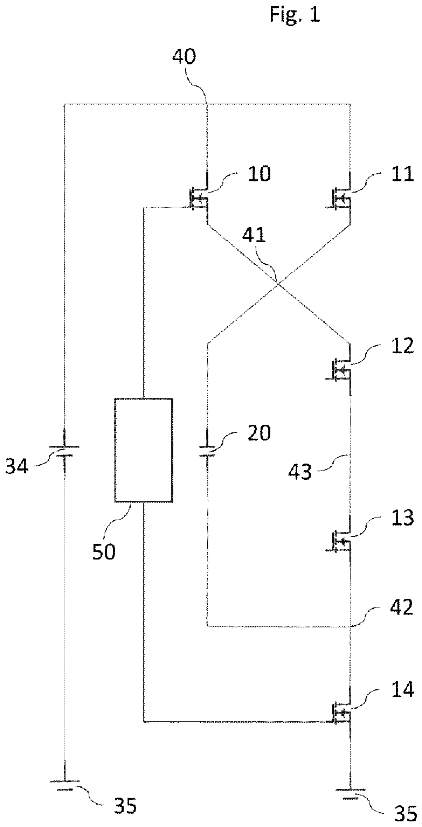

Figure 1 illustrates a buck converter circuit including a pre-charging switch (10), a switching element Q1 (11), a switching element Q2 (12), a switching element Q3 (13), a switching element Q4 (14), a flying capacitor (20), a voltage supply node (40), a voltage supply (34), a first flying capacitor node (41), a second flying capacitor node (42), a switch node (43), a ground connection (35) and a control system (50).

The ground connection (35), the voltage supply (34), the voltage supply node (40), the pre-charging switch (10) and the first flying capacitor node (41) are sequentially connected in series. The voltage supply node (40), the switching element Q1 (11) and the first flying capacitor node (41) are sequentially connected in series. The first flying capacitor node (41), the flying capacitor (20), the second flying capacitor node (42), the switching element Q4 (14) and the ground connection (35) are sequentially connected in series. The first flying capacitor node (41), the switching element Q2 (12), the switch node (43), the switching element Q3 (13) and the second flying capacitor node (42) are sequentially connected in series.

An input voltage Vᵢₙ is supplied at the voltage supply node (40) by the voltage supply (34).

The control system (50) is configured for executing a pre-charging process (100) and a cyclic converting process (200). During the pre-charging process (100) the control system (50) controls the pre-charging switch (10) and the switching element Q4 (14) to be conductive. This builds up a voltage difference in the flying capacitor (20). The voltage difference built up in the flying capacitor (20) reduces the voltage difference supplied at the switching node (43) during the different steps of the cyclic converting process. Additionally, the voltage difference built up in the flying capacitor (20) reduces the voltage difference across at least some, optionally all, switching elements (10, 11, 12, 13, 14) of the buck converter circuit.

The cyclic converting process (200) includes alternating charging and discharging steps (210, 230) for cyclic discharging and charging of the flying capacitor (20). During the cyclic converting process (200), the control system (50) controls the pre-charging switch (10) to be isolating when the switching element Q1 is isolating (11). The cyclic converting process (200) further includes a charging step (210) and a discharging step (230). During the charging step (210) of the cyclic converting process (200), the control system (50) controls the switching element Q1 (11) and the switching element Q3 (13) to be conductive and the switching element Q2 (12) and the switching element Q4 (14) to be isolating to charge the flying capacitor (20). During the discharging step (230) of the cyclic converting process (200), the control system (50) controls the switching element Q2 (12) and the switching element Q4 (14) to be conductive and the switching element Q1 (11) and the switching element Q3 (13) to be isolating to discharge the flying capacitor (20). Optionally, the voltage supply (34) and the switching element Q4 (14) may be connected to the ground connection (35) via a common ground node (36).

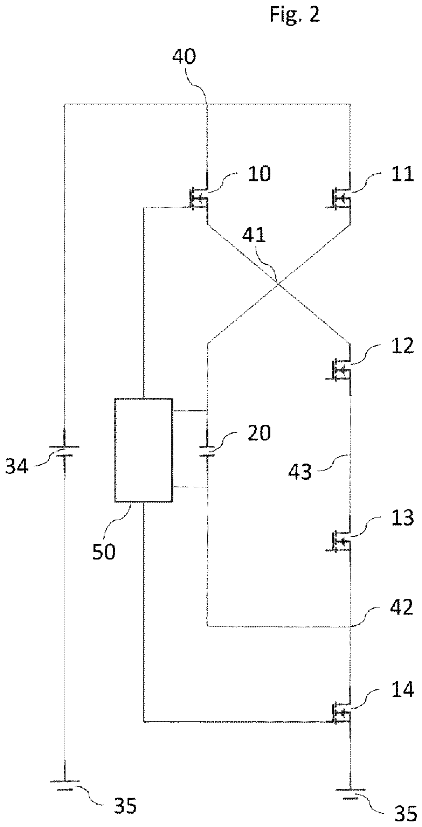

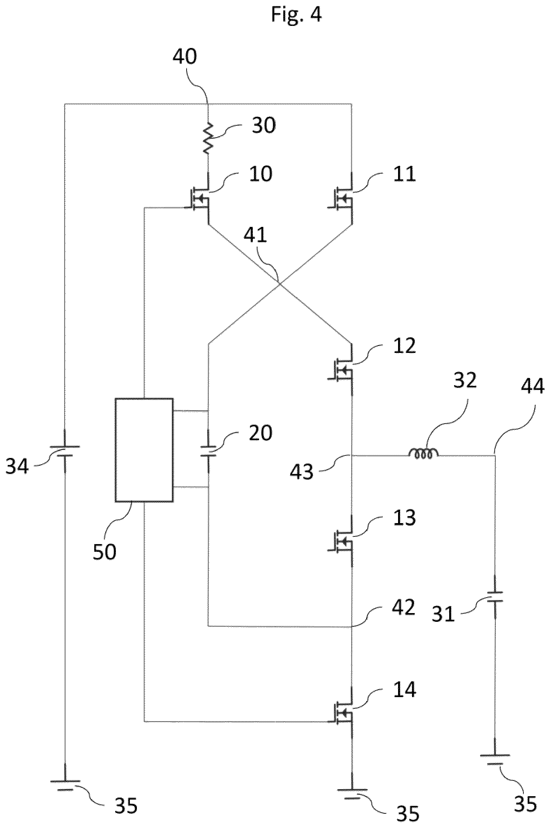

The figures 2 through 5 include the electrical components illustrated in figure 1. The figures 2 through 5 may include additional electrical components. The additional electrical components of the various embodiments may be combined. Individual electrical components of one embodiment may be combined with other embodiments. E.g. the pre-charging resistor (30) illustrated in figure 4 may be combined with the embodiment described in figure 1 without including the inductor (32), the output node (44), the capacitor (31) and/or the ground connection (35).

Figure 2 illustrates a buck converter circuit, the control system (50) including a voltage measuring device. The voltage measuring device is connected in parallel to the flying capacitor (20). E.g. the voltage measuring device is connected to both ends of the flying capacitor (20). Optionally, the voltage measuring device may be connected to the first flying capacitor node (41) and the second flying capacitor node (42).

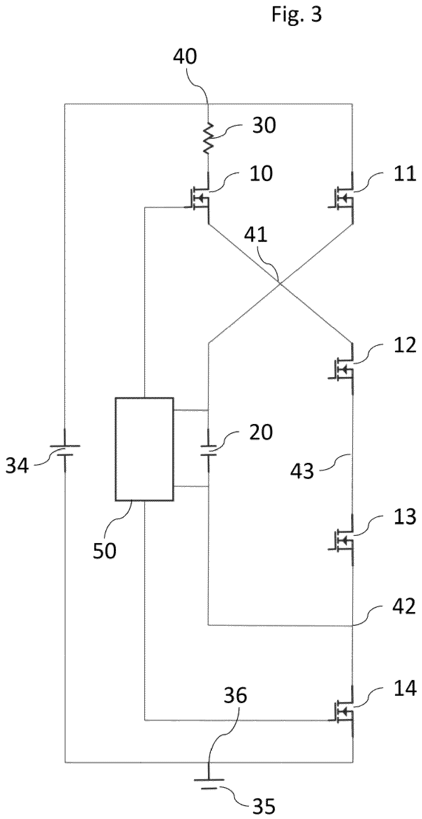

Figure 3 illustrates a buck converter circuit, the buck converter circuit further including a pre-charging resistor (30). The voltage supply node (40), the pre-charging resistor (30) and the pre-charging switch (10) are sequentially connected in series. Further, the voltage supply (34) and the switching element Q4 (14) are connected to the ground connection (35) via a common ground node (36). Optionally, the voltage supply (34) and the switching element Q4 (14) may have separate ground connections (35).

Figure 4 illustrates a buck converter circuit, the buck converter circuit further including a pre-charging resistor (30), an inductor (32), a capacitor (31) and an output node (44). The voltage supply node (40), the pre-charging resistor (30) and the pre-charging switch (10) are sequentially connected in series. The switching node (43), the inductor (32), the output node (44), the capacitor (31) and the ground connection (35) are sequentially connected in series. Optionally, the voltage supply (34), the switching element Q4 (14) and the capacitor (31) may be connected to the ground connection (35) via a common ground node (36).

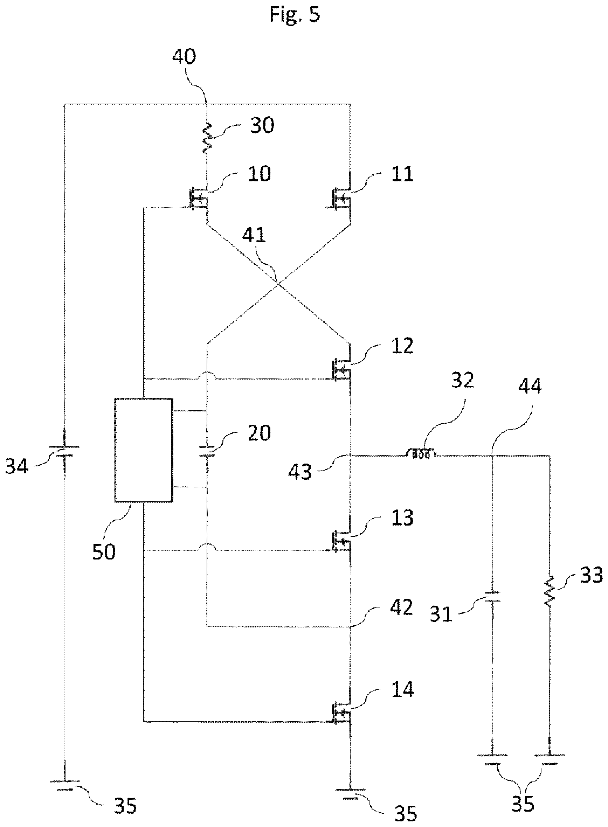

Figure 5 illustrates a buck converter circuit, the buck converter circuit further including an output resistor (33). The output node (44), the output resistor (33) and the ground connection (35) are sequentially connected in series. Optionally, the voltage supply (34), the switching element Q4 (14), the capacitor (31) and the output resistor (33) may be connected to the ground connection (35) via a common ground node (36).

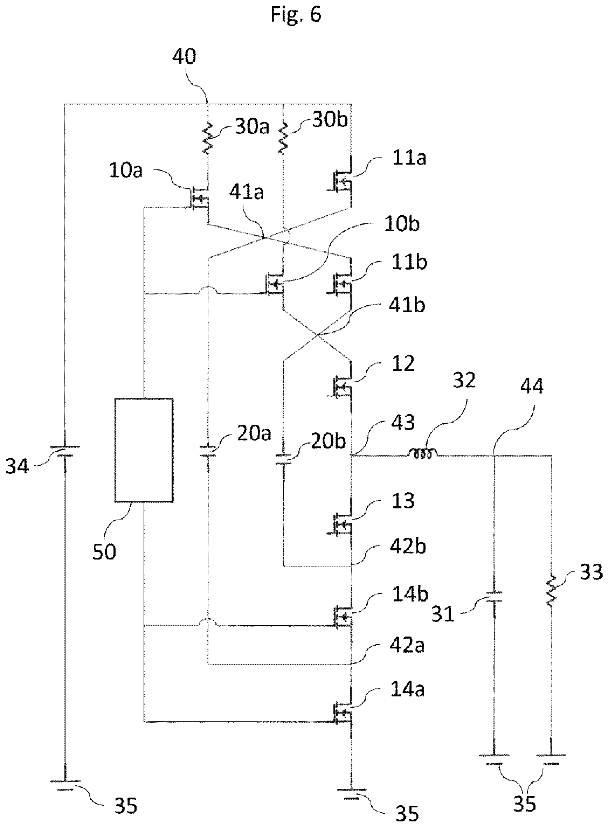

Figure 6 illustrates a four-level buck converter circuit. The buck converter circuit includes a pre-charging switch A (10a), a pre-charging switch B (10b), a pre-charging resistor A (30a), a pre-charging resistor B (30b), a switching element Q1A (11a), a switching element Q1B (11b), a switching element Q2 (12), a switching element Q3 (13), a switching element Q4A (14a), a switching element Q4B (14b), a flying capacitor A (20a), a flying capacitor B (20b), a voltage supply (34), a voltage supply node (40), a first flying capacitor node A (41a), a fist flying capacitor node B (41b), a second flying capacitor node A (42b), a second flying capacitor node B (42b), a switch node (43), a ground connection (35), a control system (50), an inductor (32), a capacitor (31), an output resistor (33) and an output node (44).

The ground connection (35), the voltage supply (34), the voltage supply node, the pre-charging resistor A (30a), the pre-charging switch A (10a) and the first flying capacitor node A (41a) are sequentially connected in series. The voltage supply node, the pre-charging resistor B (30b), the pre-charging switch B (10b) and the first flying capacitor node B (41b) are sequentially connected in series.

The voltage supply node, the switching element Q1A (11a) and the first flying capacitor node A (41a) are sequentially connected in series. The first flying capacitor node A (41a), the switching element Q1B (11b) and the first flying capacitor node B (41b) are sequentially connected in series.

The first flying capacitor node A (41a), the flying capacitor A (20a), the second flying capacitor node A (42b), the switching element Q4A (14a) and the ground connection (35) are sequentially connected in series. The first flying capacitor node B (41b), the flying capacitor B (20b), the second flying capacitor node B (42b), the switching element Q4B (14b) and the second flying capacitor node A (42b) are sequentially connected in series.

The first flying capacitor node B (41b), the switching element Q2 (12), the switch node (43), the switching element Q3 (13) and the second flying capacitor node B (42b) are sequentially connected in series. The switching node (43), the inductor (32), the output node (44), the capacitor (31) and the ground connection (35) are sequentially connected in series. The output node (44), the output resistor (33) and the ground connection (35) are sequentially connected in series. Optionally, the voltage supply (34), the switching element Q4A (14a), the capacitor (31) and the output resistor (33) may be connected to the ground connection (35) via a common ground node (36).

An input voltage Vᵢₙ is supplied at the voltage supply node by the voltage supply (34). The control system (50) is configured for executing a pre-charging process A (100), a pre-charging process B (100) and a cyclic converting process (200).

During the pre-charging process A (100), the control system (50) controls the pre-charging switch A (10a) and the switching element Q4A (14a) to be conductive. This builds up a voltage difference in the flying capacitor A (20a). During the pre-charging process B (100), the control system (50) controls the pre-charging switch B (10b), the switching element Q4B (14b) and the switching element Q4A (14a) to be conductive. This builds up a voltage difference in the flying capacitor B (20b). The pre-charging process A (100) and the pre-charging process B (100) may be executed sequentially or at the same time.

In an alternative embodiment, the four-level buck convert circuit illustrated in figure 6 does not include the pre-charging resistor B (30b) and the pre-charging switch B (10b). In this embodiment, during the pre-charging process B (100), the control system (50) controls the pre-charging switch A, the switching element Q1B (11b), the switching element Q4A (14a) and the switching element Q4B (14b) to be conductive. This builds up a voltage difference in the flying capacitor B (20b). The pre-charging process A (100) and the pre-charging process B (100) may be executed sequentially or at the same time.

The cyclic converting process (200) includes alternating charging and discharging steps (210, 230) for cyclic discharging and charging of the flying capacitor A (20a) and the flying capacitor B (20b). During the cyclic converting process (200), the control system (50) controls the pre-charging switch A (10a) to be isolating when the switching element Q1 is isolating A (11a) and the pre-charging switch B (10b) to be isolating when the switching element Q1B (11b) is isolating.

The cyclic converting process (200) includes a charging step (210), a transferring step and a discharging step (230). The transferring step discharges one flying capacitor and charges another flying capacitor.

During the charging step (210) of the cyclic converting process (200), the control system (50) controls the switching element Q1A (11a), the switching element Q4B (14b) and the switching element Q3 (13) to be conductive and the switching element Q1B (11b), the switching element Q2 (12) and the switching element Q4A (14a) to be isolating. This charges the flying capacitor A (20a).

During the transferring step of the cyclic converting process (200), the control system (50) controls the switching element Q1B (11b), the switching element Q3 (13) and the switching element Q4A (14a) to be conductive and the switching element Q1A (11a), the switching element Q2 (12) and the switching element Q4B (14b) to be isolating. This discharges the flying capacitor A (20a) and charges the flying capacitor B (20b).

During the discharging step (230) of the cyclic converting process (200), the control system (50) controls the switching element Q2 (12), the switching element Q4A (14a) and the switching element Q4B (14b) to be conductive and the switching element Q1A (11a), the switching element Q1B (11b) and the switching element Q3 (13) to be isolating. This discharges the flying capacitor B (20b).

Depending on the duty cycle, during an intermediate step (220, 240) of the cyclic converting process (200), the control system (50) may control the switching element Q1A (11a), the switching element Q1B (11b) and the switching element Q2 (12) to be isolating and the switching element Q3 (13), the switching element Q4A (14a) and the switching element Q4B (14b) to be conducting.

Depending on the duty cycle, during an intermediate step (220, 240) of the cyclic converting process (200), the control system (50) may control the switching element Q1A (11a), the switching element Q1B (11b) and the switching element Q2 (12) to be conducting and the switching element Q3 (13), the switching element Q4A (14a) and the switching element Q4B (14b) to be isolating.

The cyclic conversion process may include at least the charging step (210), the intermediate step (220, 240), the transferring step, the intermediate step (220, 240), the discharging step (230) and the intermediate step (220, 240) to be repeated sequentially.

The four-level buck converter circuit illustrated in figure 6 includes the buck converter circuit of the disclosure in at least two embodiments. In embodiment A the switching element Q1A (11a) corresponds to the switching element Q1, the switching element Q1B (11b) is part of the switching element Q2 (12), the switching element Q4B (14b) is part of the switching element Q3 (13), the switching element Q4A (14a) corresponds to the switching element Q4 and the flying capacitor A (20a) corresponds to the flying capacitor. In embodiment B the switching element Q1 includes the switching element Q1A (11a) and the switching element Q1B (11b), the switching element Q4 include the switching element Q4A (14a) and the switching element Q4B (14b), the flying capacitor B (20b) corresponds to the flying capacitor.

The disclosure can be incorporated in a buck converter circuit of any level including at least one flying capacitor.

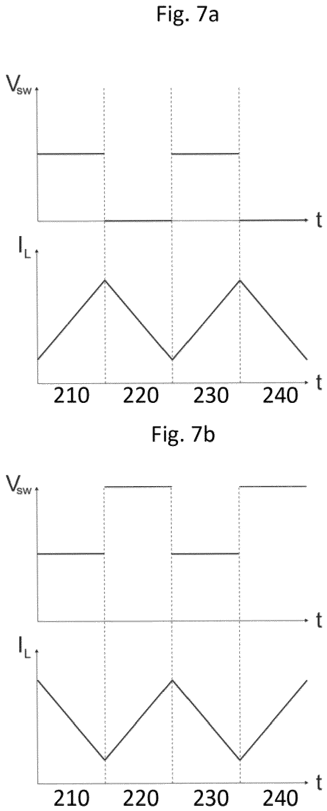

Figure 7a shows at the top a plot of the voltage supplied at the switch node (43) over one period of the cyclic converting process (200) for a duty cycle smaller than 0.5. During the charging step (210) and the discharging step (230) a voltage of 50% of the input voltage Vᵢₙ is supplied. Optionally, during the charging step (210) a voltage equal to the input voltage Vᵢₙ minus the pre-charging voltage is supplied and during the discharging step (230) the pre-charging voltage is supplied. During the intermediate step (220, 240) no voltage is supplied.

Figure 7a shows at the bottom a plot of the current I_{L} flowing in the inductor (32) over one period of the cyclic converting process (200) for a duty cycle smaller than 0.5. During the charging step (210) and the discharging step (230) the current I_{L} increases. During the intermediate step (220, 240) the current I_{L} decreases.

Figure 7b shows at the top a plot of the voltage supplied at the switch node (43) over one period of the cyclic converting process (200) for a duty cycle larger than 0.5. During the charging step (210) and the discharging step (230) a voltage of 50% of the input voltage Vᵢₙ is supplied. Optionally, during the charging step (210) a voltage equal to the input voltage Vᵢₙ minus the pre-charging voltage is supplied and during the discharging step (230) the pre-charging voltage is supplied. During the intermediate step (220, 240) the input voltage Vᵢₙ is supplied.

Figure 7b shows at the bottom a plot of the current I_{L} flowing in the inductor (32) over one period of the cyclic converting process (200) for a duty cycle smaller than 0.5. During the charging step (210) and the discharging step (230) the current I_{L} decreases. During the intermediate step (220, 240) the current I_{L} increases.

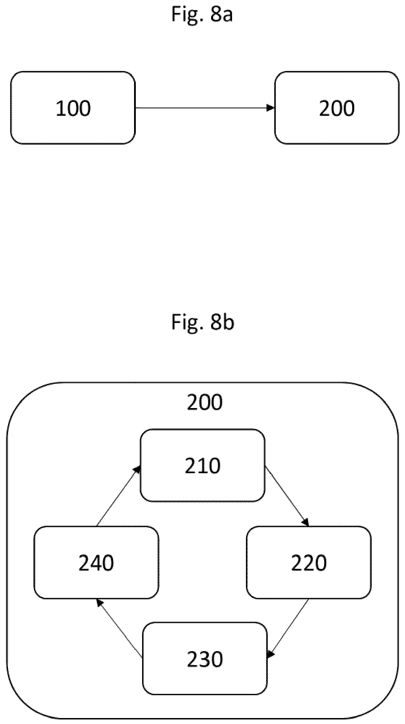

Figure 8a illustrates a diagram of the method for operating a flying capacitor in a buck converter circuit. The method includes a pre-charging process (100) and a cyclic converting process (200). The pre-charging process (100) is performed before the cyclic converting process (200). Optionally, the pre-charging process (100) may be reinitiated if the measured voltage difference built up in the flying capacitor is outside a range of tolerance. Optionally, this range of tolerance may be a variation of 15%, optionally 10%, or more optionally 5% of the pre-charging voltage.

Figure 8b illustrates a diagram of the cyclic converting process (200). The cyclic converting process (200) includes at least a charging step (210) and a discharging step (230) repeated sequentially. Optionally, the cyclic converting process (200) includes at least a charging step (210), an intermediate step (220, 240), a discharging step (230) and the intermediate step (220, 240) repeated sequentially. In case of a buck converter circuit of at least four levels a transferring step and an intermediate step (220, 240) may be included in the cyclic converting process (200) for every additional level. Optionally, all intermediate steps (220, 240) may be identical or at least two intermediate steps (220, 240) may be different.

### List of reference signs

- 10: pre-charging switch
- 11: switching element Q1
- 12: switching element Q2
- 13: switching element Q3
- 14: switching element Q4
- 20: flying capacitor
- 30: pre-charging resistor
- 31: capacitor
- 32: inductor
- 33: output resistor
- 34: voltage supply
- 35: ground connection
- 36: ground node
- 40: voltage supply node
- 41: first flying capacitor node
- 42: second flying capacitor node
- 43: switch node
- 44: output node
- 50: control system
- 100: pre-charging process
- 200: cyclic converting process
- 210: charging step
- 220: intermediate step
- 230: discharging step
- 240: intermediate step

## Claims

1. A buck converter circuit, the circuit comprising:
a pre-charging switch (10), a switching element Q1 (11), a switching element Q2 (12), a switching element Q3 (13), a switching element Q4 (14), a flying capacitor (20), a voltage supply node (40), a first flying capacitor node (41), a second flying capacitor node (41), a switch node (43) and a control system (50);
wherein the voltage supply node (40), the pre-charging switch (10) and the first flying capacitor node (41) are sequentially connected in series;
wherein the voltage supply node (40), the switching element Q1 (11) and the first flying capacitor node (41) are sequentially connected in series;
wherein the first flying capacitor node (41), the flying capacitor (20), the second flying capacitor node (41) and the switching element Q4 (14) are sequentially connected in series;
wherein the first flying capacitor node (41), the switching element Q2 (12), the switch node (43), the switching element Q3 (13) and the second flying capacitor node (41) are sequentially connected in series;
wherein an input voltage Vᵢₙ is supplied at the voltage supply node (40);
wherein the control system (50) is configured for executing a pre-charging process (100) and
a cyclic converting process (200);
wherein, during the pre-charging process (100), the control system (50) controls the pre-charging switch (10) and the switching element Q4 (14) to be conductive to build up a voltage difference in the flying capacitor (20);
wherein the cyclic converting process (200) includes alternating charging and discharging steps (210, 230) for cyclic discharging and charging of the flying capacitor (20), and wherein,
during the cyclic converting process (200):
- the control system (50) controls the pre-charging switch (10) to be isolating when the switching element Q1 is isolating;
- during a charging step (210) of the cyclic converting process (200), the control system (50) controls the switching element Q1 (11) and the switching element Q3 (13) to be conductive and the switching element Q2 (12) and the switching element Q4 (14) to be isolating to charge the flying capacitor (20);
- during a discharging step (230) of the cyclic converting process (200), the control system (50) controls the switching element Q2 (12) and the switching element Q4 (14) to be conductive and the switching element Q1 (11) and the switching element Q3 (13) to be isolating to discharge the flying capacitor (20).

2. The buck converter circuit of any previous claim, the circuit further comprising:
a pre-charging resistor (30);
wherein the voltage supply node (40), the pre-charging resistor (30) and the pre-charging switch (10) are sequentially connected in series.

3. The buck converter circuit of any previous claim,
wherein the control system (50) comprises a voltage measuring device for measuring the voltage difference built up in the flying capacitor (20);
wherein the control system (50) is configured to terminate the pre-charging process (100) once the measured voltage difference built up in the flying capacitor (20) exceeds a predetermined pre-charging voltage threshold value.

4. The buck converter circuit of any previous claim, the circuit further comprising:
an inductor (32), a capacitor (31), an output node (43), and a ground connection (35);
wherein the second flying capacitor (20) node (41), the switching element Q4 (14), and the ground connection (35) are sequentially connected in series; and
wherein the switch node (43), the inductor (32), the output node (43), the capacitor (31) and
the ground connection (35) are sequentially connected in series.

5. The buck converter circuit of the previous claim,
wherein the buck converter circuit provides a user-defined output voltage Vₒᵤₜ at the output node (43);
wherein, during the cyclic converting process, the controller performs a pulse-width modulation to reduce the input voltage Vᵢₙ to the user-defined output voltage Vₒᵤₜ.
wherein the cyclic converting process (200) comprises at least the charging step (210), an intermediate step (220, 240), the discharging step (230) and the intermediate step (220, 240) to be repeated sequentially.

6. The buck converter circuit of the previous claim,
wherein, the pulse-width modulation defines a duty cycle;
wherein, for a duty cycle smaller than 0.5, the switching element Q3 (13) and the switching element Q4 (14) are configured to be conductive and the switching element Q1 (11) and the switching element Q2 (12) are configured to be isolating during the intermediate step (220, 240) of the cyclic converting process (200);
wherein, for a duty cycle larger than 0.5, the switching element Q1 (11) and the switching element Q2 (12) are configured to be conductive and the switching element Q3 (13) and the switching element Q4 (14) are configured to be isolating during the intermediate step (220, 240) of the cyclic converting process (200);

7. The buck converter circuit of any previous claim,
wherein the control system (50) controls the switching element Q1 (11), the switching element Q2 (12) and the switching element Q3 (13) to be isolating during the pre-charging process (100); and
wherein the control system (50) controls the switching element Q1 (11), the switching element Q2 (12), the switching element Q3 (13) and the switching element Q4 (14) during the cyclic converting process (200).

8. The buck converter circuit of any previous claim:
wherein the control system is configured to reinitiate the pre-charging process (100);
wherein the control system reinitiates the pre-charging process (100) if the measured voltage difference built up in the flying capacitor (20) is outside a range of tolerance.

9. The buck converter circuit of the previous claim,
wherein the range of tolerance is defined by a 15% variation of the pre-charging voltage.

10. A method for operating a flying capacitor (20) in a buck converter circuit, wherein the buck converter circuit comprises:
a pre-charging switch (10), a switching element Q1 (11), a switching element Q2 (12), a switching element Q3 (13), a switching element Q4 (14), the flying capacitor, a voltage supply node (40), a first flying capacitor node (41), a second flying capacitor node (41), a switch node (43) and a control system (50);
wherein the voltage supply node (40), the pre-charging switch (10) and the first flying capacitor node (41) are sequentially connected in series;
wherein the voltage supply node (40), the switching element Q1 (11) and the first flying capacitor node (41) are sequentially connected in series;
wherein the first flying capacitor node (41), the flying capacitor (20), the second flying capacitor node (41) and the switching element Q4 (14) are sequentially connected in series;
wherein the first flying capacitor node (41), the switching element Q2 (12), the switch node (43), the switching element Q3 (13) and the second flying capacitor node (41) are sequentially connected in series;
the method comprising:
supplying an input voltage Vᵢₙ at the voltage supply node (40);
performing a pre-charging process (100) to build up a voltage difference in the flying capacitor (20); and
performing a cyclic converting process (200) wherein the cyclic converting process (200) includes alternating charging and discharging steps (210, 230) for cyclic discharging and
charging of the flying capacitor (20);
wherein the pre-charging process (100) comprises:
controlling the pre-charging switch (10) and the switching element Q4 (14) to be conductive to build up a voltage difference in the flying capacitor (20);
wherein the cyclic converting process (200) comprises:
controlling the pre-charging switch (10) to be isolating when the switching element Q1 is isolating;
controlling, during a charging step (210) of the cyclic converting process (200), the switching element Q1 (11) and the switching element Q3 (13) to be conductive and the switching element Q2 (12) and the switching element Q4 (14) to be isolating to charge the flying capacitor (20);
controlling, during a discharging step (230) of the cyclic converting process (200), the switching element Q2 (12) and the switching element Q4 (14) to be conductive and the switching element Q1 (11) and the switching element Q3 (13) to be isolating to discharge the flying capacitor (20).

11. The method for operating a flying capacitor (20) in a buck converter circuit according to claim 10,
wherein the method is carried out by the buck converter circuit according to any one of claims 1 to 9.

## Amended claims

### Amended claims in accordance with Rule 137(2) EPC.

1. A buck converter circuit, the circuit comprising:
a pre-charging switch (10), a switching element Q1 (11), a switching element Q2 (12), a switching element Q3 (13), a switching element Q4 (14), a flying capacitor (20), a voltage supply node (40), a first flying capacitor node (41), a second flying capacitor node (41), a switch node (43) and a control system (50);
wherein the voltage supply node (40), the pre-charging switch (10) and the first flying capacitor node (41) are sequentially connected in series via an isolated electrical connection;
wherein the voltage supply node (40), the switching element Q1 (11) and the first flying capacitor node (41) are sequentially connected in series;
wherein the first flying capacitor node (41), the flying capacitor (20), the second flying capacitor node (41) and the switching element Q4 (14) are sequentially connected in series;
wherein the first flying capacitor node (41), the switching element Q2 (12), the switch node (43), the switching element Q3 (13) and the second flying capacitor node (41) are sequentially connected in series;
wherein an input voltage Vᵢₙ is supplied at the voltage supply node (40);
wherein the control system (50) is configured for executing a pre-charging process (100) and a cyclic converting process (200);
wherein, during the pre-charging process (100), the control system (50) controls the pre-charging switch (10) and the switching element Q4 (14) to be conductive to build up a voltage difference in the flying capacitor (20);
wherein the cyclic converting process (200) includes alternating charging and discharging steps (210, 230) for cyclic discharging and charging of the flying capacitor (20), and wherein, during the cyclic converting process (200):
- the control system (50) controls the pre-charging switch (10) to be isolating when the switching element Q1 is isolating;
- during a charging step (210) of the cyclic converting process (200), the control system (50) controls the switching element Q1 (11) and the switching element Q3 (13) to be conductive and the switching element Q2 (12) and the switching element Q4 (14) to be isolating to charge the flying capacitor (20);
- during a discharging step (230) of the cyclic converting process (200), the control system (50) controls the switching element Q2 (12) and the switching element Q4 (14) to be conductive and the switching element Q1 (11) and the switching element Q3 (13) to be isolating to discharge the flying capacitor (20).

2. The buck converter circuit of any previous claim, the circuit further comprising:
a pre-charging resistor (30);
wherein the voltage supply node (40), the pre-charging resistor (30) and the pre-charging switch (10) are sequentially connected in series.

3. The buck converter circuit of any previous claim,
wherein the control system (50) comprises a voltage measuring device for measuring the voltage difference built up in the flying capacitor (20);
wherein the control system (50) is configured to terminate the pre-charging process (100) once the measured voltage difference built up in the flying capacitor (20) exceeds a predetermined pre-charging voltage threshold value.

4. The buck converter circuit of any previous claim, the circuit further comprising:
an inductor (32), a capacitor (31), an output node (43), and a ground connection (35);
wherein the second flying capacitor (20) node (41), the switching element Q4 (14), and the ground connection (35) are sequentially connected in series; and
wherein the switch node (43), the inductor (32), the output node (43), the capacitor (31) and the ground connection (35) are sequentially connected in series.

5. The buck converter circuit of the previous claim,
wherein the buck converter circuit provides a user-defined output voltage Vₒᵤₜ at the output node (43);
wherein, during the cyclic converting process, the controller performs a pulse-width modulation to reduce the input voltage Vᵢₙ to the user-defined output voltage Vₒᵤₜ.
wherein the cyclic converting process (200) comprises at least the charging step (210), an intermediate step (220, 240), the discharging step (230) and the intermediate step (220, 240) to be repeated sequentially.

6. The buck converter circuit of the previous claim,
wherein, the pulse-width modulation defines a duty cycle;
wherein, for a duty cycle smaller than 0.5, the switching element Q3 (13) and the switching element Q4 (14) are configured to be conductive and the switching element Q1 (11) and the switching element Q2 (12) are configured to be isolating during the intermediate step (220, 240) of the cyclic converting process (200);
wherein, for a duty cycle larger than 0.5, the switching element Q1 (11) and the switching element Q2 (12) are configured to be conductive and the switching element Q3 (13) and the switching element Q4 (14) are configured to be isolating during the intermediate step (220, 240) of the cyclic converting process (200);

7. The buck converter circuit of any previous claim,
wherein the control system (50) controls the switching element Q1 (11), the switching element Q2 (12) and the switching element Q3 (13) to be isolating during the pre-charging process (100); and
wherein the control system (50) controls the switching element Q1 (11), the switching element Q2 (12), the switching element Q3 (13) and the switching element Q4 (14) during the cyclic converting process (200).

8. The buck converter circuit of any previous claim:
wherein the control system is configured to reinitiate the pre-charging process (100);
wherein the control system reinitiates the pre-charging process (100) if the measured voltage difference built up in the flying capacitor (20) is outside a range of tolerance.

9. The buck converter circuit of the previous claim,
wherein the range of tolerance is defined by a 15% variation of the pre-charging voltage.

10. A method for operating a flying capacitor (20) in a buck converter circuit, wherein the buck converter circuit comprises:
a pre-charging switch (10), a switching element Q1 (11), a switching element Q2 (12), a switching element Q3 (13), a switching element Q4 (14), the flying capacitor, a voltage supply node (40), a first flying capacitor node (41), a second flying capacitor node (41), a switch node (43) and a control system (50);
wherein the voltage supply node (40), the pre-charging switch (10) and the first flying capacitor node (41) are sequentially connected in series;
wherein the voltage supply node (40), the switching element Q1 (11) and the first flying capacitor node (41) are sequentially connected in series;
wherein the first flying capacitor node (41), the flying capacitor (20), the second flying capacitor node (41) and the switching element Q4 (14) are sequentially connected in series;
wherein the first flying capacitor node (41), the switching element Q2 (12), the switch node (43), the switching element Q3 (13) and the second flying capacitor node (41) are sequentially connected in series;
the method comprising:
supplying an input voltage Vᵢₙ at the voltage supply node (40);
performing a pre-charging process (100) to build up a voltage difference in the flying capacitor (20) by charging the flying capacitor (20) via an isolated electrical connection of the voltage supply (34) to the flying capacitor (20) and the ground connection (35); and
performing a cyclic converting process (200) wherein the cyclic converting process (200) includes alternating charging and discharging steps (210, 230) for cyclic discharging and
charging of the flying capacitor (20);
wherein the pre-charging process (100) comprises:
controlling the pre-charging switch (10) and the switching element Q4 (14) to be conductive to build up a voltage difference in the flying capacitor (20);
wherein the cyclic converting process (200) comprises:
controlling the pre-charging switch (10) to be isolating when the switching element Q1 is isolating;
controlling, during a charging step (210) of the cyclic converting process (200), the switching element Q1 (11) and the switching element Q3 (13) to be conductive and the switching element Q2 (12) and the switching element Q4 (14) to be isolating to charge the flying capacitor (20);
controlling, during a discharging step (230) of the cyclic converting process (200), the switching element Q2 (12) and the switching element Q4 (14) to be conductive and the switching element Q1 (11) and the switching element Q3 (13) to be isolating to discharge the flying capacitor (20).

11. The method for operating a flying capacitor (20) in a buck converter circuit according to claim 10,
wherein the method is carried out by the buck converter circuit according to any one of claims 1 to 9.
